## Europäisches Patentamt
## European Patent Office
## Office européen des brevets

(19)

(11) Veröffentlichungsnummer: **0 050 252**
**B1**

(12)

# EUROPÄISCHE PATENTSCHRIFT

(45) Veröffentlichungstag der Patentschrift:
03.10.84

(21) Anmeldenummer: 81107881.5

(22) Anmeldetag: 03.10.81

(51) Int. Cl.³: **G 06 K 7/14**, G 06 K 7/10,
G 06 K 9/18

(54) Verfahren und Vorrichtung zum Erkennen von Kontrastlinienmustern an Gegenständen.

(30) Priorität: 17.10.80 DE 3039191

(43) Veröffentlichungstag der Anmeldung:
28.04.82 Patentblatt 82/17

(45) Bekanntmachung des Hinweises auf die Patenterteilung:
03.10.84 Patentblatt 84/40

(84) Benannte Vertragsstaaten:
AT BE CH DE FR GB IT LI LU NL SE

(56) Entgegenhaltungen:
EP - A - 0 017 950
EP - A - 0 050 252
DE - A - 2 338 561
DE - A - 2 457 259
US - A - 3 784 792
US - A - 3 854 036

ELEKTRONIK, Band 22, Heft 11, November 1973, Seiten 395-398 München, DE. K.R. KIMMEL et al.: "Rationelle Multiplikation und Division mit Festwertspeichern"

(73) Patentinhaber: Scantron GmbH & Co. Elektronische Lesegeräte KG, Legienstrasse 14,
D-6230 Frankfurt/Hoechst (DE)

(72) Erfinder: Wevelsiep, Klaus, Dr., Fuchstanzstrasse 11,
D-6239 Kriftel (DE)
Erfinder: Kastner, Anton, Ing. grad., Am Rathaus 22,
D-6200 Wiesbaden (DE)

(74) Vertreter: Eisenführ & Speiser, Martinistrasse 24,
D-2800 Bremen 1 (DE)

# Beschreibung

Die Erfindung betrifft ein Verfahren und eine Vorrichtung zum Erkennen von Kontrastlinienmustern an Gegenständen gemäss dem Oberbegriff der Ansprüche 1 bzw. 2.

Aus der älteren, jedoch als Dokument EP-A-0050252 nachveröffentlichten, europäischen Patentanmeldung 80101991.0 ist ein derartiges Verfahren und eine derartige Vorrichtung bekannt, bei dem bzw. der jeweils ein vorgegebenes Kontrastlinienmuster (PIC) aus mehreren möglichen Kontrastlinienmustern nur dann erkennbar ist, wenn dieses vorgegebene Kontrastlinienmuster in einer vorgegebenen Richtung abgetastet wird. Im Suchbetrieb muss daher das Bildfenster solange unter verschiedenen Winkeln abgetastet werden, bis das Kontrastlinienmuster in der vorgegebenen Richtung abgetastet wird. Der Suchbetrieb nimmt daher im Mittel eine relativ grosse Zeit in Anspruch.

Aufgabe der Erfindung ist es demgegenüber, das Verfahren und die Vorrichtung gemäss der europäischen Patentanmeldung 80101991.0 derart weiterzubilden, dass der Erkennungsvorgang für ein oder mehrere Kontrastlinienmuster beschleunigt wird.

Diese Aufgabe wird erfindungsgemäss durch die kennzeichnenden Merkmale des Anspruches 1 gelöst.

Diese Aufgabe wird bei einer Vorrichtung erfindungsgemäss durch die kennzeichnenden Merkmale des Anspruches 2 gelöst.

Die Vorteile der Erfindung liegen insbesondere darin, dass irgend ein Kontrastlinienmuster aus einer vorgegebenen Anzahl m verschiedener Kontrastlinienmuster jederzeit erkannt und mit einem individuellen Erkennungssignal gemeldet wird, und dass insbesondere auch die Erkennung jedes der verschiedenen Kontrastlinienmuster sowohl bei Abtastung in Vorwärtsrichtung als auch in Rückwärtsrichtung möglich ist. Zu diesem Zweck wird die in Vorwärtsrichtung vorhandene Hell-Dunkel-Folge sowie die hiervon verschiedene, in Rückwärtsrichtung vorhandene Hell-Dunkel-Folge des betreffenden Kontrastlinienmusters erkannt und jeweils mit einem spezifischen Erkennungssignal gemeldet, das angibt, welches der Kontrastlinienmuster in der Vorwärts- oder in der Rückwärtsrichtung erkannt wurde. Beim Suchbetrieb lässt sich die Anzahl der durchzuführenden Winkelschritte auf diese Weise halbieren, weil jedes Kontrastlinienmuster beim Abtasten in Vorwärtsrichtung und in Rückwärtsrichtung erkannt wird. Die Folge hiervon ist eine erhebliche Zeiteinsparung bei der Durchführung des Suchbetriebes.

Die Möglichkeit, verschiedene Kontrastlinienmuster mit einer nachgeschalteten Dekodierschaltung individuell erkennen zu können, erlaubt es, dem bzw. den speziell verwendeten Kontrastlinienmustern einen bestimmten Informationsgehalt zu verleihen. So kann z.B. das speziell eingesetzte Kontrastlinienmuster auch eine Information über den speziellen Aufbau der verwendeten Zeichenfolge der Datenspuren beinhalten. Insbesondere kann z.B. ein spezielles Kontrastlinienmuster immer dann eingesetzt werden, wenn in der ersten Datenspur lediglich Alpha-Zeichen, z.B. der Artikelname usw. in Klarschrift aufgedruckt ist. Ein anderes spezielles Kontrastlinienmuster kann immer dann zur Anwendung kommen, wenn z.B. nur die zweite Datenspur mit Alpha-Zeichen, z.B. dem Artikelnamen belegt ist, usw. Alternativ können auch vor, hinter bzw. unter den einzelnen Datenspuren einzelne spezielle Kontrastlinienmuster angeordnet werden, die immer dann verwendet werden, wenn diese betreffende Datenspur einen bestimmten, vorgesehenen Aufbau besitzt. Wird ein bestimmtes Kontrastlinienmuster erkannt, und wird das entsprechende, individuelle $PIC_m$-OUT-Signal abgegeben, so kann dieses Signal in der nachfolgenden Steuerschaltung verwendet werden, um dem Aufbau der betreffenden Datenspur jeweils entsprechende Steuervorgänge vorzunehmen. So lässt sich z.B. das $PIC_m$-OUT-Signal – im ersten Beispiel – verwenden, um für die erste Datenspur einen Alpha-Zeichen-Dekoder zu aktivieren, und um anschliessend einen zweiten Dekoder für numerische Zeichen zu aktivieren.

Vorteilhafte Weiterbildungen der Erfindung sind durch die Merkmale der Unteransprüche gekennzeichnet.

Im folgenden werden Ausführungsbeispiele der Erfindung anhand der Zeichnung näher erläutert. Es zeigen:

Fig. 1 eine erste Anordnung eines Kontrastlinienmusters innerhalb eines Kennzeichnungsfeldes mit einer Datenspur;

Fig. 2 eine zweite Anordnung eines Kontrastlinienmusters innerhalb eines Kennzeichnungsfeldes;

Fig. 3 eine dritte Anordnung eines Kontrastlinienmusters innerhalb eines Kennzeichnungsfeldes;

Fig. 4 eine hell-dunkel-Verteilung verschiedener Kontrastlinienmuster senkrecht zu den Kontrastlinien;

Fig. 5 ein Abschnitt des Videosignals als Funktion der Zeit, der dem Kontrastlinienmuster der Fig. 4a entspricht;

Fig. 6 ein Blockschaltbild der Zählschaltung der Dekodiereinrichtungen;

Fig. 7 ein Blockschaltbild der Vergleichstabelle der Dekodiereinrichtung;

Fig. 8 eine weitere Ausführung der Vergleichstabelle der Dekodiereinrichtung;

Fig. 9 ein Blockschaltbild der Auswerteschaltung der Dekodiereinrichtung;

Fig. 10 eine schematische Darstellung des Aufbaus der Tabelle;

Fig. 11 einen Impulsplan für die im Zeitsteuerkreis der Zählschaltung erzeugten Impulse, und

Fig. 12 einen Impulsplan für die innerhalb der Auswahlschaltung verarbeiteten Impulse;

Fig. 13 ein Schaltbild einer weiteren Ausführungsform der Tabelle gemäss Fig. 8, mit einer nachgeschalteten Torschaltung zum selektiven Auslesen verschiedener Erwartungsfelder innerhalb jedes Festwertspeichers.

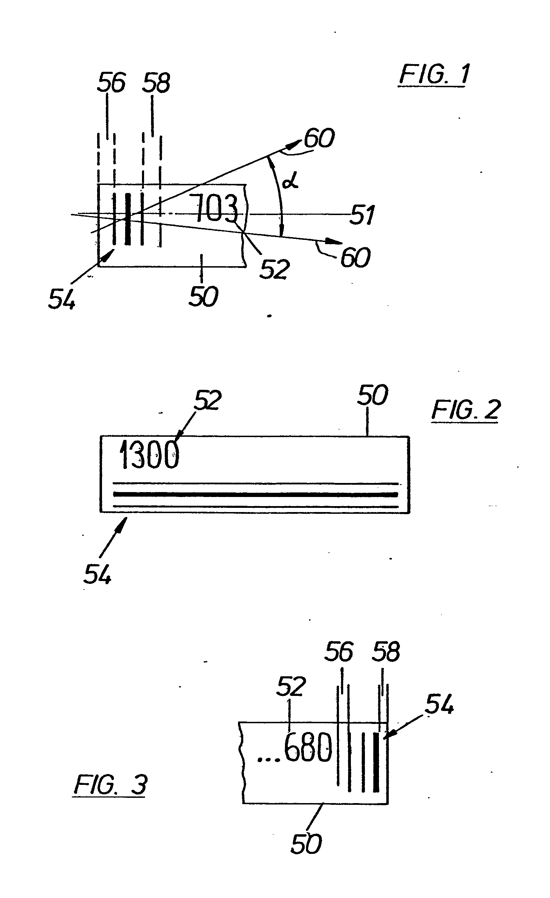

In den Fig. 1 bis 3 sind verschiedene Kennzeichnungsfelder 50, z.B. aufklebbare Preisetiketten, dargestellt, die z.B. auf einem Behälter, einer Pakkung oder irgendeinem Warenartikel befestigt ist und in willkürlicher Position und Ausrichtung auf einem Bildfenster erscheint. Das Bildfenster wird z.B. durch die optische Apertur einer Lichtpunkt-Abtasteinrichtung, z.B. eines Vidikons bestimmt, durch die das Bildfenster zuerst zeilenweise, anschliessend in einem zeilenförmigen Abtastraster abgetastet wird.

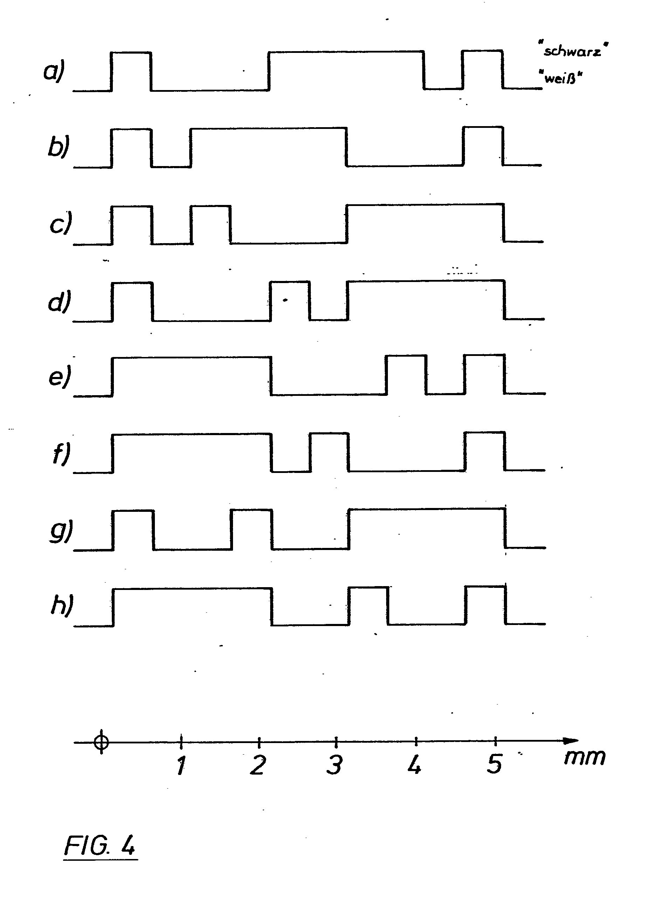

Die Kennzeichnungsfelder 50 besitzen jeweils in mindestens einer Datenspur 51 kontrastierende Zeichen 52 zur Identifizierung der mit dieser Kennzeichnung versehenen Ware. Die kontrastierenden Zeichen bestehen bevorzugt aus Klarschriftzeichen in einer der bekannten maschinell lesbaren Schrifttypen, z.B. in der OCR-A-Schrift bzw. der OCR-B-Schrift. In vorgegebener Position und Orientierung zur Datenspur ist ein Kontrastlinienmuster 54 angeordnet – auch Positionsidentifizierungscode PIC genannt – das mehrere parallele Kontrastlinien mit unterschiedlichen Abständen und/oder Linienbreiten besitzt. Das Kontrastlinienmuster ist gemäss Fig. 1 vor der Datenspur, gemäss Fig. 2, unter der Datenspur, gemäss Fig. 3 am Ende der Datenspur angebracht. Das Kontrastlinienmuster 54 ist senkrecht zu den Kontrastlinien asymmetrisch ausgebildet, um das Kennzeichnungsfeld hinsichtlich Beginn und Ende der Datenspuren zu kennzeichnen. Die in den Fig. 1 und 2 dargestellten Kontrastlinienmuster, nachfolgend als PIC-Muster bezeichnet, besitzen eine zeichenfreie Vorlaufzone 56 und eine zeichenfreie Nachlaufzone 58.

Obwohl nur PIC-Muster mit jeweils drei Linien dargestellt sind, lassen sich auch PIC-Muster mit mehr als drei Linien verwenden. Ferner lassen sich die PIC-Muster – abweichend von den Fig. 1 bis 3 – auch in anderer Position und anderer Orientierung bezüglich der Datenspuren anbringen, es lassen sich ferner auch zwei oder mehrere PIC-Muster auf einem Kennzeichnungsfeld 50 aufbringen.

Wie in Fig. 1 dargestellt ist, wird das Bildfenster, bzw. ein dem Bildfenster entsprechendes Abbild, z.B. auf dem Target eines Vidikons, schrittweise mit einem Schrittwinkel $\alpha$ von jeweils mindestens einer Abtastzeile 60 abgetastet. Es ist wesentlich, dass vor dem Lesen der Datenspuren zuerst das PIC-Muster sicher erkannt, und seine Position und Orientierung relativ zum Abtaststrahl 60 bestimmt wird, da dann durch eine anschliessende Rasterabtastung in Richtung der Datenspur die in der Datenspur enthaltenen Zeichen gelesen werden können.

Fig. 4 zeigt die hell-dunkel-Verteilung verschiedener, drei Linien enthaltender PIC-Muster senkrecht zur Linienrichtung, die alle asymmetrisch aufgebaut sind.

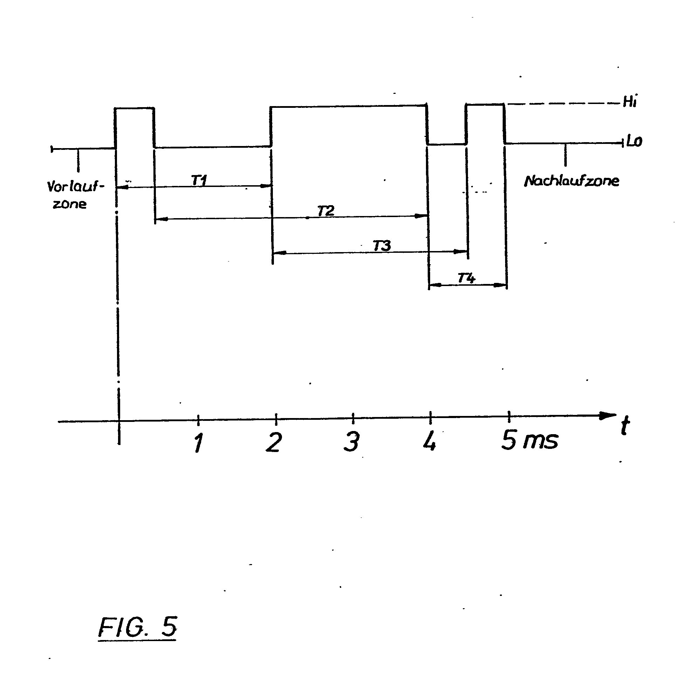

Fig. 5 zeigt einen Abschnitt des Videosignals, der beim Abtasten eines PIC-Musters gemäss Fig. 4a als elektrisches, binäres Signal erhalten wird, wobei dunklen Bereichen des PIC-Musters die Amplitude Hi und hellen Bereichen des PIC-Musters die Amplitude Lo zugeordnet ist. Eventuelle Hell-Dunkel-Schwankungen innerhalb der einzelnen Linien und Abstände des PIC-Musters werden unmittelbar nach dem Abtasten im elektrischen Signal beseitigt. Innerhalb des Videosignalabschnitts gemäss Fig. 5 sind eine zeichenfreie Vorlaufzone, die der Vorlaufzone 56 in Fig. 1 entspricht, ein erstes Intervall I 1 von der ersten Anstiegsflanke bis zur zweiten Anstiegsflanke, ein zweites Intervall I 2 von der ersten Abfallflanke bis zur zweiten Abfallflanke, ein drittes Intervall I 3 von der zweiten Anstiegsflanke bis zur dritten Anstiegsflanke und ein viertes Intervall I 4 von der zweiten Abfallflanke bis zur dritten Abfallflanke sowie eine Nachlaufzone, die der Nachlaufzone 58 gemäss Fig. 1 entspricht, eingetragen.

Die Dekodierung des PIC-Musters, z.B. gemäss Fig. 5, erfolgt nach dem Delta-Distanz-Verfahren, bei dem jeweils überprüft wird, ob aufeinanderfolgende und sich überlappende Intervalle, also I 1, I 2 und I 2, I 3 und I 3, I 4 in einem vorgegebenen Verhältnis zueinander stehen, welches durch das zu dekodierende PIC-Muster gegeben ist. Liegt der Wert des Quotienten aufeinanderfolgender, sich überlappender Intervallängen innerhalb vorgegebener Wertebereiche, wobei die Bereichsbreiten durch die Druckunschärfen und die Digitalisierungsunschärfen gegeben sind, so liegt mit grosser Wahrscheinlichkeit das gesuchte PIC-Muster vor.

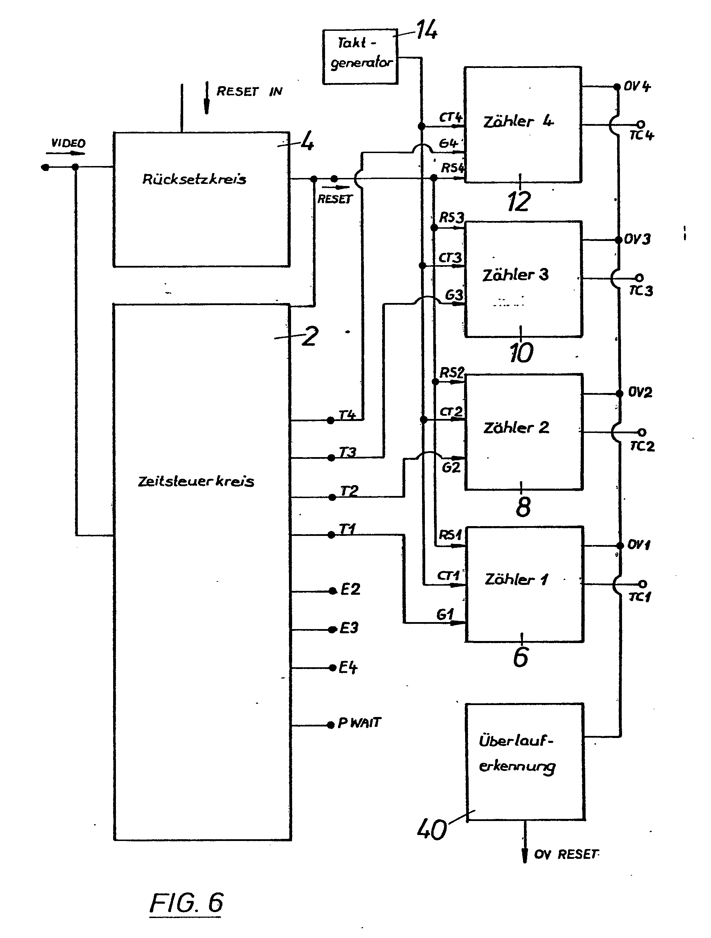

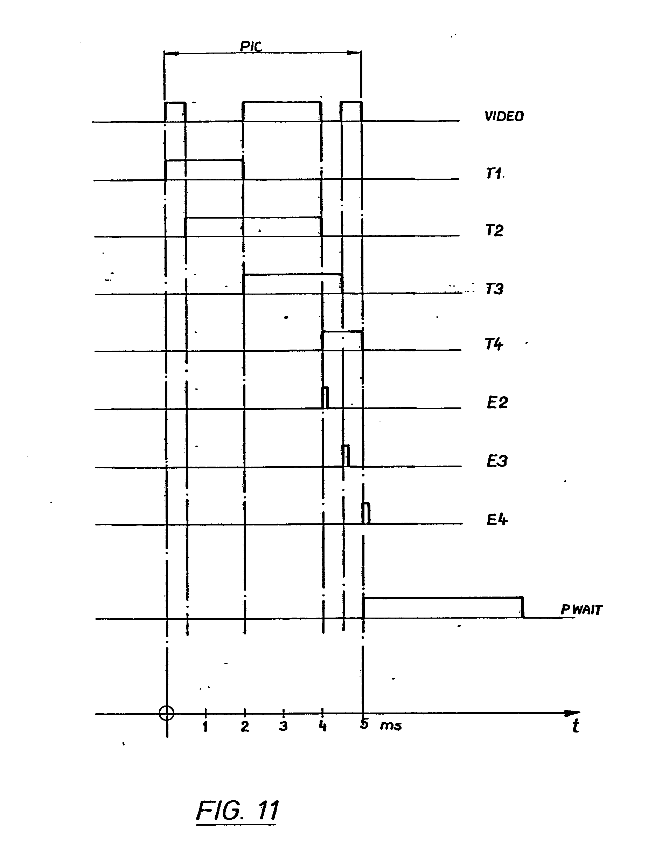

Fig. 6 zeigt die Zählschaltung, die den Eingang der Dekodiervorrichtung bildet und die Intervalllängen der Intervalle I 1 bis I 4 bestimmt und als Binärwerte zur weiteren Verarbeitung zur Verfügung stellt. Die Zählschaltung enthält einen Zeitsteuerkreis 2, dem das Videosignal VIDEO zugeführt wird, und der an einem ersten Ausgang ein erstes Torsignal T 1 von einer ersten Anstiegsflanke bis zu einer zweiten Anstiegsflanke des Videosignals, an einem zweiten Ausgang ein zweites Torsignal T 2 von einer der ersten Anstiegsflanke nachfolgenden Abfallflanke bis zu einer zweiten Abfallflanke des Videosignals, an einem dritten Ausgang ein drittes Torsignal T 3 von der zweiten Anstiegsflanke bis zu der nächsten, dritten Anstiegsflanke, und an einem vierten Ausgang ein viertes Torsignal T 4 von der zweiten Abfallflanke bis zu einer nächsten, dritten Abfallflanke abgibt, vgl. den Impulsplan nach Fig. 11. Die Torsignale T 1 bis T 4 werden einzeln im Toreingang G 1 bis G 4 je eines Zählers 6 bis 12 zugeführt. Jeder Zähler 6 bis 12 empfängt an seinem Zähleingang CT 1 bis CT 4 Taktimpulse von einem Taktgenerator 14, die von den Zählern 6 bis 12 so lange gezählt werden, wie das Torsignal T 1 bis T 4 anliegt. Der am Ausgang des jeweiligen Zählers 6 bis 12 abgebbare Zählerstand TC 1 bis TC 4 stellt dann ein Mass für die Länge der Torsignale T 1 bis T 4 dar.

Im Zeitsteuerkreis 2 wird von der Abstiegsflanke des Torsignals T 2 ein Auslösesignal E 2, von der Abstiegsflanke des Torsignals T 3 ein Auslösesignal E 3 sowie von der Abstiegsflanke des Torsignals T 4 ein Auslösesignal E 4 erzeugt und an getrennten Ausgängen abgegeben. Vom Auslösesignal E 4 wird ferner ein Signal PWAIT erzeugt, dessen Länge der zeichenfreien Nachlaufzone nach dem Ende des Torsignals T 4 entspricht und an einem getrennten Ausgang abgegeben wird.

Die Zählschaltung enthält ferner einen Rücksetzkreis 4, der das Videosignal VIDEO, und an einem getrennten Eingang ein externes Rücksetzsignal RESET IN bei Beginn jeder Abtastzeile empfängt. Der Rücksetzkreis 4 gibt ein Rücksetzsignal RESET an den Rücksetzeingang RS 1 bis RS 4 der Zähler 6 bis 12 sowie an den Zeitsteuerkreis 2 ab und setzt die Zähler 6 bis 12 sowie den Zeitsteuerkreis 2 ab und setzt die Zähler 6 bis 12 sowie den Zeitsteuerkreis 2 in den aktiven Ausgangszustand zurück, wenn das Videosignal einen zeichenfreien Abschnitt – Amplitude Lo – enthält, der grösser ist als die maximale Abtaststrecke zwischen den Linien des PIC-Musters, wobei diese maximale Abtaststrecke durch den maximalen Abstand innerhalb des PIC-Musters, multipliziert mit dem maximal zulässigen Abtastwinkel, gegeben ist.

Die Zählschaltung enthält ferner eine Überlauf-Erkennung 40, die vom Überlauf-Ausgang OV 1 bis OV 4 der Zähler 6 bis 12 ein Überlaufsignal erhält und dann ein Rücksetzsignal OV RESET abgibt und dann die Dekodiervorrichtung in einen neuen Bereitzustand zurücksetzt.

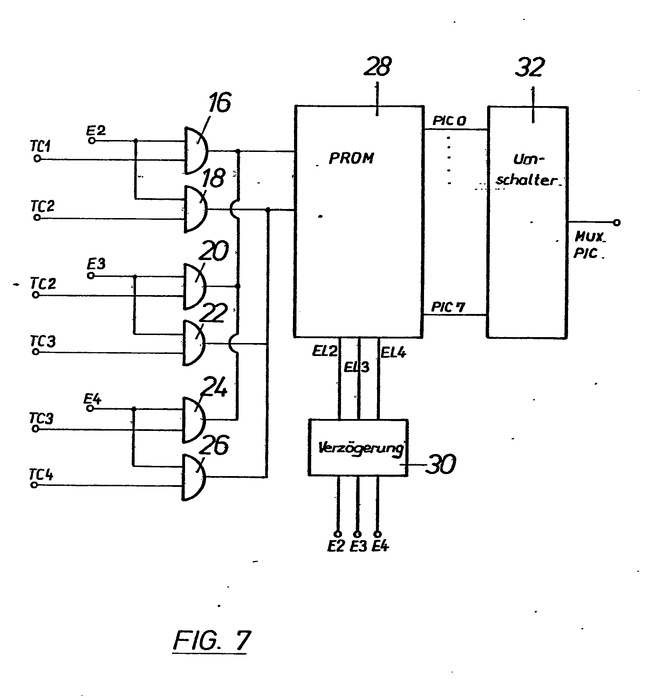

Fig. 7 zeigt eine Ausführungsform der Vergleichstabelle der Dekodiervorrichtung. Die Vergleichstabelle enthält einen Festwertspeicher PROM 28. Das PROM 28 ist derart organisiert, dass der Zählstand TC 1 des Zählers 6 einzelne Zeilen einer ersten Speichermatrix adressiert, und dass der Zählstand TC 2 des Zählers 8 einzelne Spalten der ersten Speichermatrix adressiert. Die Zählerstände TC 1 und TC 2 werden über die Torschaltung 16, 18 nach Auszählen des Zählerstandes TC 2 durch das Auslösesignal E 2 an das PROM 28 gelegt. Innerhalb der ersten Speichermatrix wird ein Erwartungsfeld vorgegeben, welches diejenigen Speicherplätze umfasst, bei denen der Quotient aus Zeilenadresse und Spaltenadresse innerhalb eines vorgegebenen Wertebereichs liegt. Dieser Wertebereich entspricht im Quotienten aus erster Intervallänge zu zweiter Intervallänge des verwendeten PIC-Musters. Wird durch die Zählerstände TC 1 und TC 2 ein Speicherplatz innerhalb des Erwartungsfeldes adressiert, wird ein Signal LPIC 1 z.B. mit einer Amplitude Hi abgegeben, welches signalisiert, dass eine Information abgetastet wurde, die einem Teil des verwendeten PIC-Musters entspricht.

Um in entsprechender Weise einen Vergleich der Torimpulse T 2 mit T 3 durchzuführen, adressiert der Zählerstand TC 2 des zweiten Zählers 8 die Zeilen einer zweiten Speichermatrix, und der Zählerstand TC 3 des dritten Zählers 10 adressiert die Spalten der zweiten Speichermatrix. Die Adressierung erfolgt, nachdem der Zählerstand TC 3 ausgezählt ist und die Zählerstände TC 2 und TC 3 durch das Auslösesignal E 3 durch die Torschaltung 20, 22 an das PROM 28 geliefert werden. Innerhalb der zweiten Matrix ist ebenfalls ein Erwartungsfeld vorgegeben, welches diejenigen Speicherplätze umfasst, deren Quotient aus Zeilenadresse und Spaltenadresse innerhalb eines vorgegebenen Bereichs liegt, der gleich dem Wertebereich des Quotienten der den Torsignalen T 2 und T 3 entsprechenden Intervalle des PIC-Musters ist. Wird ein Speicherplatz in dem Erwartungsfeld adressiert, wird ein Signal LPIC 2 z.B. mit der Amplitude Hi abgegeben. Bei Adressierung eines Speicherplatzes ausserhalb des Erwartungsfeldes wird ein Signal z.B. mit Amplitude Lo abgegeben.

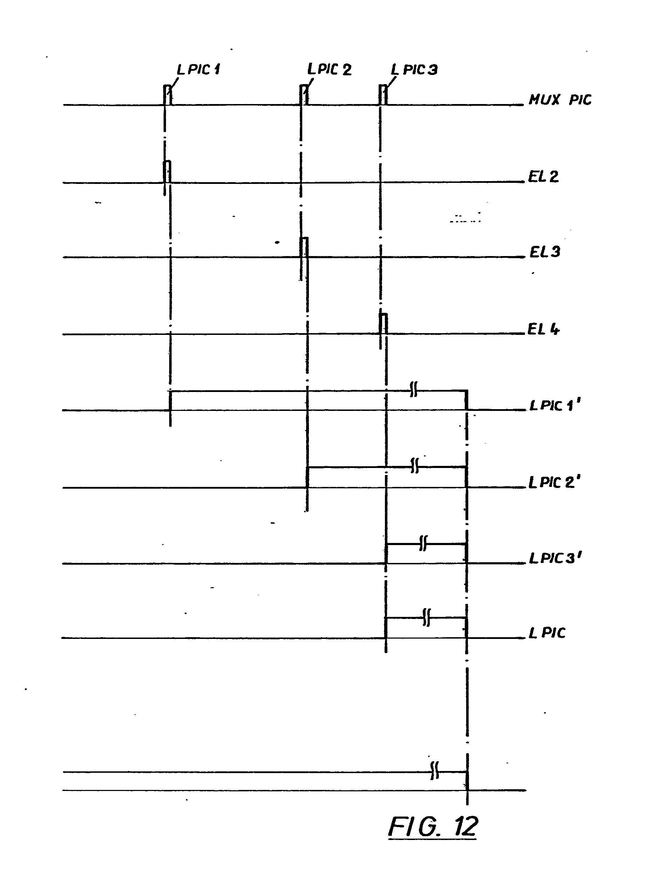

Der Vergleich der Zählerstände TC 3 des dritten Zählers 10 mit dem Zählerstand TC 4 erfolgt in derselben Weise durch Adressierung von Zeilen und Spalten einer dritten Speichermatrix, die ebenfalls ein Erwartungsfeld enthält, wobei bei Adressierung eines Speicherplatzes innerhalb des Erwartungsfeldes ein LPIC 3 der ersten Amplitude Hi abgegeben wird. Die Adressierung der dritten Speichermatrix erfolgt, nachdem der Zählerstand TC 4 des vierten Zählers 12 gezählt ist und das Auslösesignal E 4 die Zählerstände TC 3 und TC 4 durch die Torschaltung 24 und 26 an das PROM 28 abgibt. Die Torschaltungen 16 bis 26 bestehen aus UND-Toren. Die Auslesung der Signale LPIC 1, LPIC 2 und LPIC 3 erfolgt durch die Auslesesignale EL 2, EL 3 und EL 4, die durch Verzögerung der Auslösesignale E 2, E 3 und E 4 in der Verzögerungsschaltung 30 gewonnen werden, vgl. den Impulsplan nach Fig. 12. Die Auslesung darf erst dann erfolgen, nachdem die Adressierung der ersten, zweiten und dritten Speichermatrix eingeschwungen ist.

Alternativ zu der Ausführungsform gemäss Fig. 7 lassen sich die erste Speichermatrix durch einen ersten Festwertspeicher, PROM 1, die zweite Speichermatrix durch einen zweiten Festwertspeicher, PROM 2, und die dritte Speichermatrix durch einen dritten Festwertspeicher, PROM 3, verwirklichen, da dann vorteilhafterweise drei einzelne Festwertspeicher wesentlich kleinerer Speicherkapazität verwendet werden können.

Der Festwertspeicher 28 besitzt Speicherplätze, die jeweils n-Bit gross sind, wobei z.B. n = 8 gilt. Da zur Vergabe eines Erwartungsfeldes jeweils nur ein Bit belegt wird, lassen sich in jedem PROM gleichzeitig bis zu n verschiedene Erwartungsfelder für m verschiedene PIC-Muster unterbringen, wobei z.B. bevorzugt n = 8 und im PROM 1 das erste Erwartungsfeld im jeweils ersten Bit der Speicherplätze, das zweite Erwartungsfeld im jeweils zweiten Bit der Speicherplätze usw. untergebracht ist. Entsprechendes gilt für PROM 2 und PROM 3. Für jeweils ein bestimmtes PIC-Muster hat dann die Zeilen- und Spaltenadressierung selektiv in die entsprechenden Bits der Speicherplätze zu erfolgen. Ferner ist dem PROM 28 ein Umschalter 32 nachgeschaltet, der selektiv die Auslesung der Vergleichssignale LPIC 1, LPIC 2 und LPIC 3 aus den betreffenden Bits der Speicherplätze vornimmt und an seinem Ausgang das aus den sequentiellen Signalen LPIC 1 und LPIC 2 und LPIC 3 gebildete Auswertesignal MUX PIC an die Auswerteschaltung abgibt.

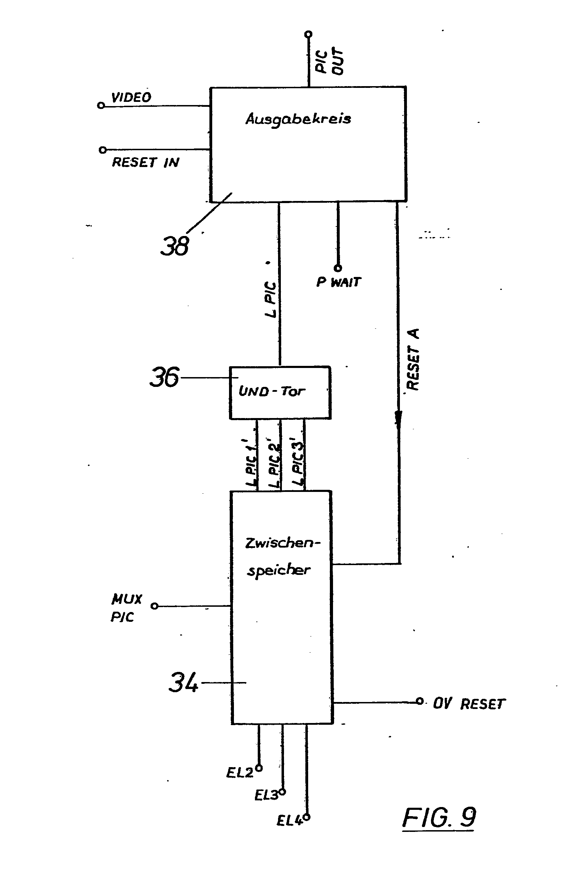

In Fig. 9 ist die Auswerteschaltung der Dekodiervorrichtung dargestellt. Ein Zwischenspeicher 34 empfängt das Auswertesignal MUX PIC und speichert das Vergleichssignal LPIC 1 – das angibt, dass der Wert TC 1/TC 2 innerhalb eines vorgegebenen Bereichs liegt – sowie das Signal LPIC 2 und das Signal LPIC 3 ab. Die Einspeicherung erfolgt durch die Eingabe der Auslesesignale EL 2, EL 3 und EL 4, die im wesentlichen gleichzeitig mit den Signalen LPIC 1, LPIC 2 und LPIC 3 auftritt, vgl. den Impulsplan gemäss Fig. 12. Nachdem alle im Zwischenspeicher als Speichersignale LPIC 1', LPIC 2', LPIC 3' abgespeichert sind, werden diese Speichersignale an ein UND-Tor 36 abgegeben, das ein Ausgangssignal LPIC abgibt, wenn alle Speichersignale LPIC 1' usw. eine erste Amplitude besitzen, die der ersten Amplitude der Signale LPIC 1 usw. entspricht, vgl. Fig. 12. Das Ausgangssignal LPIC wird einem Ausgabekreis 38 zugeführt, der das Videosignal VIDEO und vom Steuerkreis 2 das Wartesignal PWAIT empfängt. Der Ausgabekreis 38 gibt ein Erkennungssignal PIC OUT ab, wenn das Videosignal VIDEO während des Anliegens des Wartesignals PWAIT auf der Amplitude Lo verharrt, die einen zeichenfreien Untergrund kennzeichnet. Dadurch ist sichergestellt, dass das dekodierte Linienmuster von einer zeichenfreien Nachlaufzone gefolgt · wird, die gleich der Nachlaufzone 58 des PIC-Musters ist.

Der Ausgabekreis 38 wird durch das externe Rücksetzsignal RESET IN zurückgesetzt, der daraufhin ein Rücksetzsignal RESETA an den Zwischenspeicher 34 abgibt und diesen ebenfalls für einen erneuten Betrieb zurücksetzt. Der Zwischenspeicher wird ferner durch das Überlauf-Rücksetzsignal OV RESET zurückgesetzt, wenn ein Zähler 6 bis 12 einen Überlauf signalisiert.

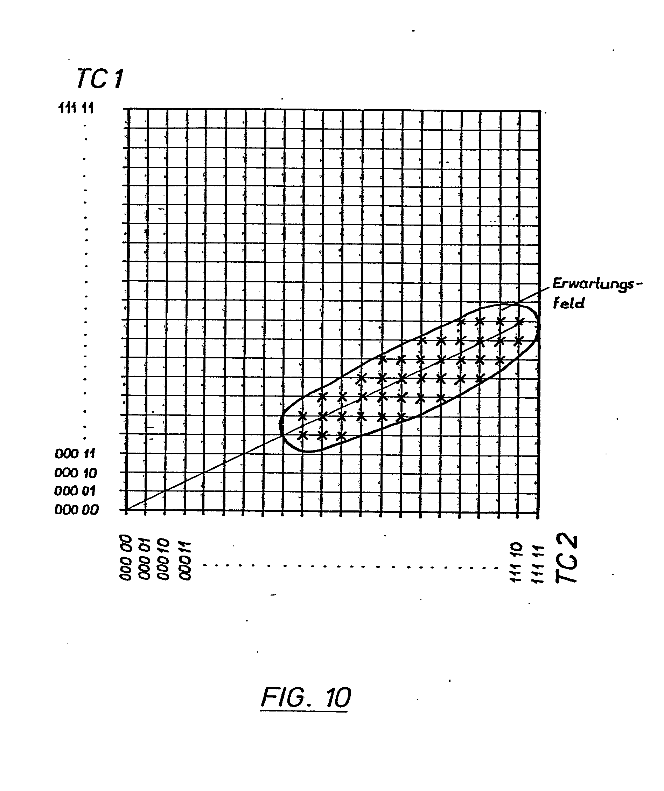

Fig. 10 zeigt in schematischer Darstellung, wie die Tabelle, z. B. die Teil-Tabelle des PROM 1 zum Vergleich des Quotienten TC 1/TC 2, organisiert ist. Die Tabelle ist als Speichermatrix dargestellt, die Zeilen der Tabelle sind mit binären Adressen fortlaufend bezeichnet. Die Spalten der Tabelle sind ebenfalls mit binären Adressen fortlaufend bezeichnet, wobei gemäss einer bevorzugten Ausführungsform der erfindungsgemässen Dekodiervorrichtung eine 5-Bit-Darstellung gewählt ist. Alle Speicherplätze mit einem bestimmten Wert des Quotienten aus Zeilenadresse zu Spaltenadresse liegen auf einer Linie, der sogenannten Erwartungslinie, um die herum das Erwartungsfeld liegt, innerhalb dessen alle Speicherplätze liegen, deren Adressenquotienten innerhalb einem vorgegebenen Wertebereich sind. Die Zählerstände TC 1 bis TC 4 werden ebenfalls als 5-Bit-Wörter abgegeben. Der Zählerstand TC 1 adressiert die Zeilen der Tabelle, der Zählerstand TC 2 adressiert die Spalten der Tabelle.

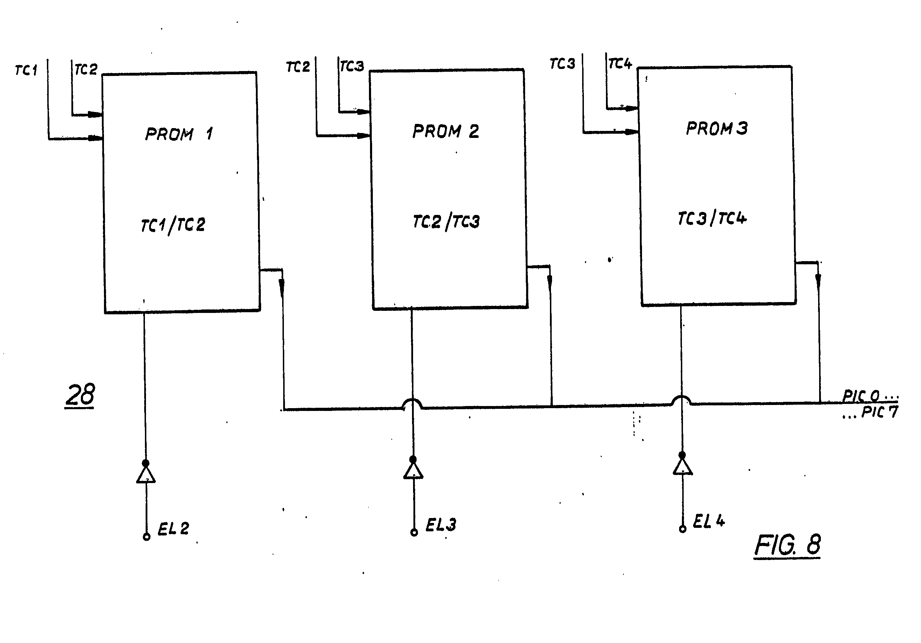

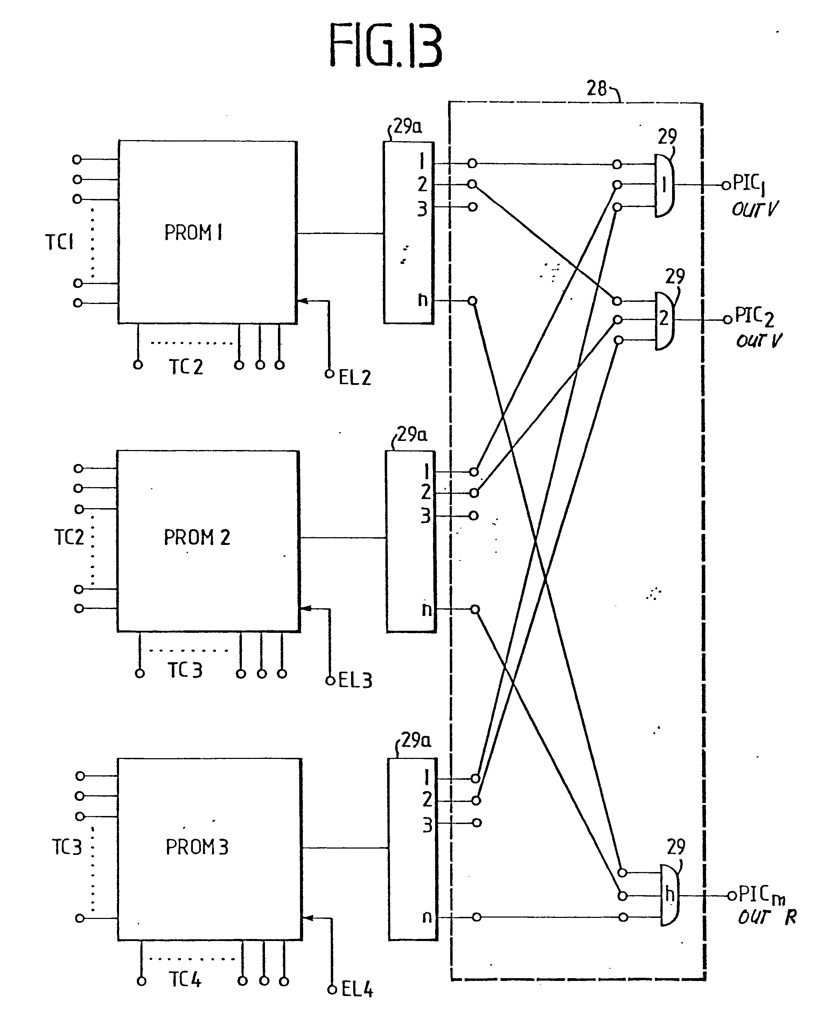

Fig. 13 zeigt ein Schaltbild einer weiteren Ausführungsform der Tabelle gemäss Fig. 8. Die Tabelle besteht aus einem ersten Festwertspeicher PROM 1, dessen Zeilen durch das gemessene erste Zählintervall TC 1, und dessen Spalten durch das zweite gemessene Zählintervall TC 2 adressiert werden. Vorgesehen ist ferner ein zweiter Festwertspeicher PROM 2, dessen Zeilen durch das gemessene zweite Zählintervall TC 2, und dessen Spalten durch das dritte Zählintervall TC 3 adressiert werden. Vorgesehen ist schliesslich ein dritter Festwertspeicher PROM 3, dessen Zeilen durch das dritte Zählintervall TC 3, und dessen Spalten durch das ausgezählte vierte Zählintervall TC 4 adressiert werden. Jeder Festwertspeicher PROM 1, PROM 2,... enthält somit eine zweidimensionale, zeilen- und spaltenorganisierte Speichermatrix, welche jeweils eine Vergleichstabelle für zwei aufeinanderfolgend gemessene, d.h. ausgezählte Zählintervalle des Kontrastlinienmusters verwirklicht.

Jeder durch Zeile und Spalte adressierbare Speicherplatz der Festwertspeicher PROM 1, PROM 2,... speichert ein n-Bit-grosses Datenwort, wobei $n \geq 2$ m und bevorzugt $n = 8$. Zur Erkennung m verschiedener Kontrastlinienmuster in Vorwärts- und Rückwärtsrichtung wird das Vorwärts-Erwartungsfeld für das m-te Kontrastlinienmuster $PIC_m$, $m = 1, 2, 3...$, im m-ten Bit und das Rückwärts-Erwartungsfeld im 2m-ten Bit der n-Bit-Datenwörter dadurch eingespeichert, dass das betreffende Bit den Wert «hi» besitzt, während es ausserhalb den Wert «lo» besitzt.

Den Festwertspeicher PROM 1, PROM 2,... ist eine Torschaltung 28 nachgeschaltet, die n parallele UND-Glieder 29 enthält, mit $n \geq 2$ m. Die UND-Glieder 29 besitzen jeweils so viele Eingangsanschlüsse, dass sie der Anzahl der eingesetzten Festwertspeicher PROM 1, PROM 2,... entsprechen.

Zwischen den Festwertspeichern PROM 1, PROM 2,... und der Torschaltung ist an jeden Festwertspeicher-Ausgang ein Interface 29a angekoppelt, das am Ausgang das jeweils ausgelesene Datenwort bitparallel abgibt. Das Interface besitzt also n Ausgänge; am ersten Ausgang erscheint das erste Bit, am zweiten Ausgang das zweite Bit, am dritten Ausgang das dritte Bit usw. des ausgelesenen n-Bit-Datenworts.

Die n UND-Glieder 29 sind an die Interfaces 29a so angekoppelt, dass das m-te UND-Glied an seinen verschiedenen Eingangsanschlüssen als Eingangssignale das m-te Bit der aus den verschiedenen Festwertspeichern ausgelesenen Datenwörter erhält. Das m-te UND-Glied gibt ein Ausgangssignal $PIC_m$ ab, wenn alle seine Eingangssignale den Wert «hi» besitzen, d.h. wenn von allen Festwertspeichern das m-te Bit den Wert «hi» besitzt.

Wenn also nach einem Suchvorgang (erster Verfahrensschritt) das erste UND-Glied 29 einen Impuls abgibt, wurde ein erstes Kontrastlinienmuster in Vorwärtsrichtung erkannt. Gibt das m-te UND-Glied einen Impuls ab, so wurde das m-te Kontrastlinienmuster in Vorwärtsrichtung erkannt. Gibt dagegen das zweite oder das 2m-te UND-Glied einen Impuls ab, so wurde das erste bzw. das m-te Kontrastlinienmuster in Rückwärtsrichtung erkannt. Die Torschaltung 28 gibt dann die entsprechenden Vorwärts- oder Rückwärtserkennungssignale $PIC_m$ OUT V; $PIC_m$ OUT R ab.

Den n UND-Gliedern 29 ist eine Auswahlschaltung (nicht dargestellt) nachgeschaltet, die von aussen auf eines bzw. eine Gruppe der m Kontrastlinienmuster einstellbar ist und ein Ausgangssignal nur dann abgibt, wenn das bzw. die betreffenden Kontrastlinienmuster in Vorwärtsrichtung und/oder in Rückwärtsrichtung richtig erkannt worden sind.

**Patentansprüche**

1. Verfahren zum Erkennen von Kontrastlinienmustern an Gegenständen, die in beliebiger Position und Orientierung und zu beliebigen Zeiten auf einem Bildfenster erscheinen und auf einer dem Bildfenster zugewandten Oberfläche jeweils ein Kennzeichnungsfeld aufweisen, welches in mindestens einer Datenspur Zeichen und mindestens ein Kontrastlinienmuster umfasst, welches die Position und die Orientierung der Datenspur kennzeichnet und mehrere parallele Linien mit unterschiedlichen Abständen und/oder Linienbreiten besitzt, wobei das Bildfenster zeilenweise abgetastet und ein dem abgetasteten Kontrastlinienmuster und den nachfolgenden Zeichen entsprechendes binäres Videosignal erzeugt wird, wobei das Bildfenster im ersten Verfahrensschritt unter verschiedenen Winkeln so lange abgetastet wird, bis ein vorgegebenes Kontrastlinienmuster erkannt wird, im zweiten Verfahrensschritt die Position und Ausrichtung der Datenspur relativ zum Bildfenster bestimmt wird, und im dritten Verfahrensschritt eine Rasterabtastung in Richtung der Datenspur erfolgt und die Zeichen abgelesen und dekodiert werden, wobei

zur Erkennung des Kontrastlinienmusters (PIC) die Intervallängen sich überlappender Hell-Dunkel-Intervalle (I 1 bis I 4) des Videosignals gemessen und in Form binärer Zählerstände (TC 1 bis TC 4) dargestellt werden,

die Zählerstände (TC 1 bis TC 4) eine zweidimensionale Tabelle adressieren, in der ein Erwartungsfeld mit Kriterien für ein vorgegebenes Verhältnis zweier aufeinanderfolgender Intervallängen der Intervalle (I 1 bis I 4) enthalten sind,

der einer Intervallänge (I N; N = 1–4) entsprechende Zählerstand (TC N) eine Zeile der Tabelle adressiert und der der nachfolgenden Intervallänge (I N+1) entsprechende Zählerstand eine Spalte der Tabelle adressiert,

ein Signal (LPIC 1, LPIC 2, LPIC 3) erzeugt wird, wenn das Verhältnis der beiden jeweils aufeinanderfolgenden Intervallängen in einem vorgegebenen Wertebereich liegt, und

ein Erkennungssignal (PIC OUT) abgegeben wird, wenn bei einer durch das Kontrastlinienmuster (PIC) vorgegebenen Anzahl von aufeinanderfolgenden Adressierungsschritten jeweils ein Signal (LPIC 1, LPIC 2, LPIC 3) erzeugt wird, dadurch gekennzeichnet, dass ein oder mehrere Kontrastlinienmuster (PIC$_m$; m = 1, 2, 3...) sowohl in Vorwärts- als auch in Rückwärtsrichtung abgetastet werden, dass die Zählerstände (TC 1$_m$ bis TC 4$_m$) für jedes Kontrastlinienmuster (PIC$_m$) beim Vorwärts-Ablesen jeweils ein Vorwärts-Erwartungsfeld und beim Rückwerts-Ablesen ein Rückwärts-Erwartungsfeld passieren, und dass jeweils ein Vorwärts-Erkennungssignal (PIC$_m$ OUT V) bzw. ein Rückwärts-Erkennungssignal (PIC$_m$ OUT R) abgegeben wird, wenn das betreffende Kontrastlinienmuster (PIC$_m$) bei Abtastung in Vorwärtsrichtung bzw. Rückwärtsrichtung erkannt worden ist.

2. Vorrichtung zur Durchführung des Verfahrens nach Anspruch 1 mit einer opto-elektrischen Abtasteinrichtung mit drehbarem Abtastraster, die am Ausgang ein binäres Videosignal abgibt, das einem zeilenweise abgetasteten Bildfeld entspricht und das Kontrastmuster der abgetasteten Zeile binär enthält, mit Dekodiereinrichtungen zum Erkennen mindestens eines abgetasteten Kontrastlinienmusters (PIC), das die Position und die Orientierung mindestens einer Datenspur eines Kennzeichnungsfeldes kennzeichnet und mehrere parallele Linien mit unterschiedlichen Abständen und/oder Linienbreiten enthält, und mit Einrichtungen zum Ausrichten des Abtastrasters parallel zur Datenspur und zum Lesen der abgetasteten Zeichen der Datenspur, wobei die Dekodiereinrichtungen eine Zählschaltung, die das Videosignal empfängt und die Intervallängen aufeinanderfolgend sich überlappender Intervalle des Videosignals bestimmt und als Zählerstand (TC 1 bis TC 4) abgibt und mindestens eine Tabelle enthalten, die über eine Torschaltung den aufeinanderfolgenden Intervallängen entsprechende Zählerstände (TC 1, TC 2; TC 2, TC 3; TC 3, TC 4...) paarweise empfängt und jeweils ein Signal (LPIC 1, LPIC 2, LPIC 3) abgibt, wenn das Verhältnis der beiden aufeinanderfolgenden Intervallängen in einem vorgegebenen Wertebereich liegt, das dem Verhältnis der entsprechenden Intervalle des Kontrastlinienmusters entspricht, wobei eine Auswerteschaltung vorgesehen ist, die bei Aufeinanderfolgen einer vorgegebenen Anzahl von Signalen (LPIC 1,...) ein Erkennungssignal (PIC-OUT) abgibt, wobei die Tabelle einen oder mehrere zweidimensionale Festwertspeicher (PROM 1, PROM 2,...) enthält, wobei die aufeinanderfolgenden Intervallängen entsprechende Zählerstände (TC 1 bis TC 4) eindeutig zugeordnete Zeilen und Spalten der Festwertspeicher adressieren, und wobei jeder Festwertspeicher selektiv adressierbare Erwartungsfelder für m verschiedene Kontrastlinienmuster enthält, welche diejenigen Speicherplätze umfassen, deren Quotient aus Zeilenadresse und Spaltenadresse in einem das zugeordnete Kontrastlinienmuster kennzeichnenden, vorgegebenen Wertebereich liegt, dadurch gekennzeichnet, dass jeder adressierbare Speicherplatz der Festwertspeicher (PROM 1, PROM 2,...) ein n-Bit Datenwort speichert (n ≥ 2m; m = 1, 2...), dass das m-te Bit bzw. das 2m-te Bit der n-Bit-Datenwörter für das m-te Kontrastlinienmuster (PIC$_m$) innerhalb des zugehörigen Vorwärts- bzw. Rückwärts-Erwartungsfeldes den Wert «hi» und ausserhalb den Wert «lo» besitzt, und dass den Festwertspeichern (PROM 1, PROM 2,...) eine Torschaltung (28) nachgeschaltet ist, die nach Adressierung der Festwertspeicher ein Vorwärts- bzw. Rückwärts-Erkennungssignal (PIC$_m$ OUT V; PIC$_m$ OUT R; m = 1, 2...) abgibt, das die Information enthält, welches der möglichen Kontrastlinienmuster (PIC$_m$) in Vorwärtsrichtung oder in Rückwärtsrichtung erkannt ist.

3. Vorrichtung nach Anspruch 2, dadurch gekennzeichnet, dass die Torschaltung (28n) parallele UND-Glieder (29) enthält, (wobei $n \geq 2m$; $m = 1, 2, 3\ldots$), dass das m-te UND-Glied an seinen verschiedenen Eingangsanschlüssen als Eingangssignale das m-te Bit, und das 2m-te UND-Glied das 2m-te Bit der aus den verschiedenen Festwertspeichern (PROM 1, PROM 2,...) ausgelesenen Datenwörter enthält.

## Claims

1. Method of identifying contrasting line patterns on objects which appear in a random position and orientation and at random times on an image window and each comprise a characterising field on a surface facing the image window, which field includes symbols and at least one contrasting line pattern in at least one data track, which pattern characterises the position and the orientation of the data track and has a plurality of parallel lines with different spacings and/or line widths, the image window being scanned line-by-line and a binary video signal is produced which corresponds to the scanned contrasting line pattern and the subsequent symbols, the image window, in the first step of the method, being scanned at different angles until a prescribed contrasting line pattern is identified, in the second step of the method, the position and alignment of the data track relatively to the image window is identified and, in a third step of the method, a raster scan is effected in the direction of the data track and the symbols are read and decoded, with which, for identifying the contrasting line pattern (PIC), the interval lengths of overlapping light-dark intervals (I 1 to I 4) of the video signal are measured and represented in the form of binary counter readings (TC 1 to TC 4), the counter readings (TC 1 to TC 4) address a two-dimensional table, in which are contained an expectation field with criteria for a prescribed relationship of two successive interval lengths of the intervals (I 1 to I 4), the counter reading (TC N) corresponding to an interval length (IN; N = 1 to 4) addressing a line of the table and the counter reading corresponding to the following interval length (I N+1) addressing a column of the table, a signal (LPIC 1, LPIC 2, LPIC 3)is produced when the ratio of the two respectively following interval lengths is within a prescribed value range, and an identifying signal (PIC OUT) is supplied when in each case a signal(LPIC 1, LPIC 2, LPIC 3) is produced with a number of successive addressing steps as prescribed by the contrasting line pattern (PIC), characterised in that one or more contrasting line patterns ($PIC_m$; $m = 1, 2, 3\ldots$) are scanned, both in the forward direction and the rearward direction, that the counter readings (TC $1_m$ to TC $4_m$) for each contrasting line pattern ($PIC_m$) pass a forward expectation field with the forward scanning and a rearward expectation field with the rearward scanning, respectively, and that, in each case, a forward identifying signal ($PIC_m$ OUT V) and a rearward identifying signal ($PIC_m$ OUT R), respectively, is delivered when the corresponding contrasting line pattern ($PIC_m$) has been recognised with scanning in the forward direction and rearward direction, respectively.

2. Apparatus by which the method according to claim 1 is carried into effect, having an optico-electronic scanning means with a rotatable scanning raster, which delivers, at the output, a binary video signal which corresponds to an image field scanned line-by-line and contains binarily the contrasting pattern of the scanned lines, with decoding means for identifying at least one scanned contrasting line pattern (PIC), which characterises the position and the orientation of at least one data track of a characterising field and contains a plurality of parallel lines with different spacings and/or line widths, and with means for aligning the scanning raster parallel to the data track and for reading the scanned symbols of the data track, the decoding means containing a counter circuit, which receives the video signal and determines the interval lengths of succeeding and overlapping intervals of the video signal and delivers them as a counter reading (TC 1 to TC 4), and at least one table which, through a gate circuit, receives in pairs the counter positions (TC 1, TC 2; TC 2, TC 3; TC 3, TC 4...) corresponding to the successive interval lengths and in each case delivers a signal (LPIC 1, LPIC 2, LPIC 3) when the ratio of the two successive interval lengths is within a prescribed value range corresponding to the ratio of the corresponding intervals of the contrasting line pattern, an evaluating circuit being provided which, with a succession of a prescribed number of signals (LPIC 1,...), delivers an identifying signal (PIC-OUT), the table containing one or more two-dimensional programme read-only memories (PROM 1, PROM 2...), the counter readings (TC 1 to TC 4) corresponding to the successive interval lengths addressing clearly associated lines and columns to the said memories, each such memory containing selectively addressable expectation fields for m different contrasting line patterns, which comprise those memory positions of which the quotient of line address and column address lies in a given value range characterising the associated contrasting line pattern, characterised in that each addressable storage position of the memories (PROM 1, PROM 2,...) stores an n-bit datum word ($n \geq 2m$; $m = 1, 2\ldots$), that the $m^{th}$ bit or the $2m^{th}$ bit of the n-bit data words for the $m^{th}$ contrasting line pattern ($PIC_m$) within the associated forward or rearward expectation field has the value «hi» and externally the value «lo», and that the said memories (PROM 1, PROM 2,...) have on their output side a gate circuit (28) which, after addressing the memories, delivers a forward or rearward identification signal ($PIC_m$ OUT V, $PIC_m$ OUT R; $m = 1, 2\ldots$), which contains the information which is identified from the possible contrasting line patterns ($PIC_m$) in the forward direction or in the rearward direction.

3. Apparatus according to claim 2, characterised in that the gate circuit (28n) contains parallel AND members (29) (wherein $n \geq 2m$; $m = 1$,

2,3..), that the $m^{th}$ AND member, at its different input terminals, receives as input signals the $m^{th}$ bit, and the $2m^{th}$ AND member the $2m^{th}$ bit, of the data words read out from the said different memories (PROM 1, PROM 2).

## Revendications

1. Procédé d'identification de motifs à lignes contrastées figurant sur des objets qui apparaissent dans une position et une orientation quelconques et à des moments quelconques sur une fenêtre de projection et qui présentent chacune, sur une surface tournée vers cette fenêtre de projection, un champ d'identification qui comprend un indicatif au moins disposé sur une piste de données, et au moins un motif à lignes contrastées qui caractérise la position et l'orientation de la piste de données et comporte plusieurs lignes parallèles à intervalles différents et/ou largeurs de lignes différentes, la fenêtre de projection étant balayée ligne par ligne, cependant qu'est obtenu un signal vidéo binaire correspondant au motif à lignes contrastées ainsi balayé, et à l'indicatif qui lui fait suite, la fenêtre de projection étant dans une première étape du procédé balayée sous différents angles jusqu'à ce qu'un motif à lignes contrastées prédéterminé soit identifié, tandis que dans une seconde étape du procédé la position et l'orientation de la piste de données par rapport à la fenêtre de projection sont déterminées, et que dans la troisième étape du procédé, s'effectue un balayage de la mire selon la direction de la piste de données cependant que les indicatifs sont lus et décodés, procédé dans lequel:

pour identifier le motif à lignes contrastées (PIC), les longueurs d'intervalles des intervalles clair-sombre se chevauchant (I 1 à I 4) du signal vidéo, sont mesurées et mises sous la forme d'états de compteurs binaires (TC 1 à TC 4),

les états de compteurs (TC 1 à TC 4) adressent une matrice à deux dimensions qui contient un champ de probabilité avec des critères pour un rapport prédéterminé de deux longueurs d'intervalles successives des intervalles (I 1 à I 4),

l'état de compteur (TC N) correspondant à une longueur d'intervalle (I N; N = 1 à 4) adresse une ligne de la matrice, tandis que l'état de compteur correspondant à la longueur d'intervalle suivant (I N+1) adresse une colonne de la matrice,

un signal (LPIC 1, LPIC 2, LPIC 3) est obtenu lorsque le rapport des deux longueurs d'intervalles qui se suivent à chaque fois, se situe dans une plage de valeurs prédéterminée,

un signal d'identification (PIC OUT) est délivré lorsque, pour un nombre d'étapes d'adressage successives qui est prédéterminé par le motif à lignes contrastées (PIC), on obtient à chaque fois un signal (LPIC 1, LPIC 2, LPIC 3),

caractérisé en ce qu'on balaye un ou plusieurs motifs à lignes contrastées (PIC$_m$; m = 1,2,3...) aussi bien en direction aller qu'en direction retour, en ce que les états de compteurs (TC 1$_m$ à TC 4$_m$) traversent, pour chaque motif à lignes contrastées (PIC$_m$), un champ de probabilités aller respectif lors de la lecture aller et un champ de probabilités retour respectif lors de la lecture retour, et en ce qu'un signal d'identification aller (PIC$_m$ OUT V) ou un signal d'identification retour (PIC$_m$ OUT R) est respectivement délivré lorsque le motif à lignes contrastées (PIC$_m$) considéré se trouve identifié lors du balayage en direction aller ou en direction retour.

2. Dispositif pour mettre en oeuvre le procédé selon la revendication 1, avec une installation de balayage opto-électronique comportant une mire de balayage rotative et délivrant à sa sortie un signal vidéo binaire qui correspond à la fenêtre de projection balayée ligne par ligne et qui contient, sous forme binaire, le motif contrasté de la ligne ainsi balayée, des installations de décodage étant prévues pour la détection au moins d'un motif à lignes contrastées (PIC) ainsi balayé, ce motif caractérisant la position et l'orientation d'au moins une piste de données d'un champ d'identification et contenant plusieurs lignes parallèles à intervalles et/ou largeurs de lignes différents, des installations étant prévues pour orienter la mire de balayage parallèlement à la piste de données et pour lire les indicatifs ainsi balayés de cette piste de données,

dispositif dans lequel les installations de décodage comportent un circuit de comptage qui reçoit le signal vidéo et détermine les longueurs d'intervalles des intervalles du signal vidéo qui se chevauchent successivement en les délivrant sous forme d'états de compteurs (TC 1 à TC 4), ces installations de décodage contenant au moins une matrice qui reçoit par paires, par l'intermédiaire d'un circuit de portes les états de compteurs (TC 1, TC 2; TC 2, TC 3; TC 3, TC 4...) correspondant aux longueurs d'intervalles qui se succèdent, cette matrice délivrant respectivement un signal (LPIC 1, LPIC 2, LPIC 3) lorsque le rapport des deux longueurs d'intervalles qui se succèdent, se situe dans une plage de valeurs prédéterminée qui correspond au rapport des intervalles correspondant du motif à lignes contrastées, tandis qu'il est prévu un circuit d'exploitation qui, lors de la succession d'un nombre prédéterminé de signaux (LPIC 1,...), délivre un signal d'identification (PIC OUT), et dispositif dans lequel également la matrice contient une ou plusieurs mémoires de constantes à deux dimensions (PROM 1, PROM 2,...), les états de compteurs (TC 1 à TC 4) correspondant aux longueurs d'intervalles qui se suivent, adressant de manière exclusive les lignes et les colonnes des mémoires de constantes, tandis que chacune de ces mémoires de constantes contient des champs de probabilités sélectivement adressables, pour m motifs à lignes contrastées différents, qui présentent ces emplacements de mémoire dont le quotient de l'adresse de ligne et de la ligne de colonne se situe dans une plage de valeurs prédéterminée qui identifie le motif à lignes contrastées associé,

ce dispositif étant caractérisé en ce que chaque emplacement de mémoire adressable des mémoires de constantes (PROM 1, PROM 2,...) mé-

**0050252**

morise un mot de données à n bits ($n \geq 2m$; $m = 1,2,...$),

en ce que le mième bit ou le 2mième bit des mots de données associés au mième motif à lignes contrastées ($PIC_m$) présente la valeur «hi» à l'intérieur du champ de probabilités aller ou retour associé et la valeur «lo» à l'extérieur,

et en ce qu'à la suite des mémoires de constantes (PROM 1, PROM 2...) se trouve connecté un circuit de portes (28) qui, après adressage de ces mémoires de constantes, délivre un signal d'identification aller ou retour ($PIC_m$ OUT V; $PIC_m$ OUT R; $m = 1,2,...$) qui contient l'information qui est identifiée en direction aller ou en direction retour au motif à lignes contrastées ($PIC_m$) possible.

3. Dispositif selon la revendication 2, caractérisé en ce que le circuit de portes (28n) contient des circuits ET parallèles (29) (avec $n > 2m$; $m = 1, 2, 3...$) et en ce que le mième circuit ET reçoit sur ses différentes bornes d'entrée le mième bit comme signal d'entrée, tandis que le 2mième circuit ET reçoit le 2mième bit du mot de données lu dans les différentes mémoires de constantes (PROM 1, PROM 2,...).

_FIG. 1_

56  58

60

703

α

51

52

60

54

50

52  50

_FIG. 2_

1300

54

56  58

52

54

...680

_FIG. 3_

50

FIG. 4

FIG. 5

FIG. 6

0050252

FIG. 7

19

*FIG. 8*

FIG. 9

FIG. 10

FIG. 11

FIG. 12

# FIG.13